# EUROPEAN PATENT APPLICATION

(11) **EP 1 241 597 A2**
(43) Date of publication of application: **18.09.2002**
(21) Application number: 02445033.0
(22) Date of filing: 12.03.2002
(51) Int. Cl.: G06F 17/30

(54) **Computer program product for assisting a user to select among information units of a plurality of structured information units concerning bearings and seals**

(30) Priority: 14.03.2001 US 805575
(71) Applicant: Aktiebolaget SKF, S-415 50 Göteborg (SE)
(72) Inventor: Vassmer, Gregory, Winnebago, IL 61088 (US); Affonso, Janice, Westbury, NY 11590 (US); Statler, Dan, Downingtown, PA 19335 (US); van Zijp, Jacques, 1566 DS Assendelft (NL); Puppione, Lucia, 10044 Pianezza, Torino (IT)
(74) Representative: Westman, P. Börje I.

(57) **Abstract**

Computer program product for assisting a user to select among information units of a plurality of structured information units concerning at least one of products, their use and technical solutions in relation to bearings and seals. Each information unit is arranged to comprise the following. 1) An information item comprising information related to at least one of the products, their use and technical solutions in relation to bearings and seals. 2) A descriptor tag indicating the information contents of the information item. 3) A structure tag pointing to at least one information unit in an information unit structure database. 4) A solution category tag pointing to at least one information unit in the information unit structure database and indicating belonging of the information unit to one of design, reliability, maintenance and training categories. The computer program performs the following:
a) presenting an initial set of descriptor tags using the output means,
b) receiving an instruction to assemble a new set of descriptor tags,
c) presenting the descriptor tags of the new set of the information units using the output means, and
d) repeating step b) and c) at the user's request.

## Description

### FIELD OF INVENTION

This invention relates to a computer program product for assisting a user to select among information units of a plurality of structured information units concerning at least one of products, their use and solutions in relation to bearings and seals.

### BACKGROUND OF INVENTION

The progress in the fields of computers and communications have reached a point where they can offer an increased competitive advantage for companies also within more mature technical fields, such as bearings and seals.

The increased knowledge contents of products and procedures related to these products have increased during the last decade. One of these fields is the field of bearings and seals. Even though the basic principles of today's bearings and seals in some cases are almost 100 years old, the knowledge involved with today's bearings and seals have increased in importance.

As a result of the growing knowledge in the field of bearings and seals during recent years, products, their use and application have become more differentiated and complex. Also the knowledge of designing technical solutions incorporating bearings and/or seals in other products has become increasingly important during recent years. An example of knowledge related to a technical solution is knowing what specific bearing to use in a specific application and what bearings not to use. Using non-optimum bearings increases the likelihood of malfunction. Superior manufacturers of bearings and seals have noticed the quality of offering supporting knowledge to customers, potential customers, and technical staff. The increased knowledge contents in this field have lead to an increased need of conveying information. For instance the risk of a customer selecting a non-optimum product or application of a product has increased due to the difficulty of conveying information easily. Today additional information is in some cases necessary to convey to the outside of the manufacturer's domain unless the customer is willing to risk a lower performance of an installation of a bearing or a seal. This is a consequence of the increased knowledge of the employees of a superior manufacturer of bearings and seals.

Not being able to convey information easily and swiftly to customers can be expensive for customers. Thus superior manufacturers of bearings and seals today possess knowledge that need to be conveyed to the outside of the company in the form of information.

Today the information necessary to buy and use fully the high technology products in the field of seals and bearing is sometimes available only in printed form. This leads to difficulties when accessing the printed information because it may be out of date due to the rapid development of this knowledge area, some pages of the printed information may be missing and so on.

Today there are electronic alternatives available. For instance the internet can be used to convey information. A problem with the internet is that the needed information very well may be there. However it is difficult to find due to the high number of pages on web sites. Thus, searching for the necessary information on these pages can be tedious. The circumstances under which this kind of information is requested are 1) often under time pressure and 2) that the person searching for the information has a clear image of what information that is needed.

### SUMMARY OF INVENTION

As stated above, the circumstances under which information related to products, their use and solutions in relation to bearings and seals is requested are 1) often under time pressure and 2) that the person searching for the information has a clear image of what information that is needed. This points out the need for easy-to-use and swift vehicles for conveying information concerning products, their use and solutions in relation to bearings and seals.

The purpose of the present invention is to alleviate the limitation above by suggesting an information structure system in the form of a computer program product that offers increased opportunities of finding requested information easy and swiftly.

The information structure system according to the present invention presents improved opportunities of searching, by selecting among information units, for information concerning at least one of products, their use and technical solutions in relation to bearings and seals.

According to the present invention, a computer program product for assisting a user to select among information units of a plurality of structured information units concerning at least one of products, their use and technical solutions in relation to bearings and seals is presented. Each information unit, which is comprised in an information unit database, is arranged to comprise the following four components.
1. An information item of an information unit comprises information related to at least one of the products, their use and technical solutions in relation to bearings and seals. The information items contain the actual information concerning products, their use and technical solutions in relation to bearings and seals that the user of the present invention is invited to take part of. Thus this component deals with the information contents of an information unit.
2. A descriptor tag of an information unit indicates the information contents of the information item. The descriptor tag is presented to the user initially. If the user finds the descriptor tag relevant then the user can retrieve the information item of the same information unit as the descriptor tag. Thus this component deals with the information contents of an information unit.
3. A structure tag of an information unit points to at least one information unit in an information unit structure database. A structure tag may very well point to more than one information unit in the information unit structure database. The information unit structure database includes the information units of the information unit database. The information unit structure database can be seen as a skeleton structuring the information units in relation to products and their use in relation to bearings and seals. Thus this component deals with how an information unit is interconnected to other information units on a product and/or use basis.
4. A solution category tag of an information unit points to at least on information unit in the information unit structure database. It also indicates the belonging of the information unit to one of the following four categories: design, reliability, maintenance and training. Thus a solution category tag points to a category of technical solutions or effects of technical solutions in relation to bearings and seals. As the structure tag, also the solution category tags provide a skeleton that interconnects information units.

There are also pointers interconnecting the information item, the descriptor tag, the solution category tag and the structure tag to an information unit.

The computer program product is loadable into the internal memory of a computer and it comprises computer program code portions for performing the following steps when run on a computer including input and output means:
a) Presenting an initial set of descriptor tags using the output means.
b) Receiving an instruction to assemble a new set of descriptor tags. The instruction is generated by the user using the input means to select one of a structure tag and a solution category tag. The instruction results in the generation of a new set of information units, where at least one of the structure and the solution category tags of the information units in the new set are interconnected to the information units of previous set. The present and the new information units are interconnected by at least one of a structure tag and a solution category tag.
c) Presenting the descriptor tags in the new set of the information units using the output means.
d) Repeating step b) and c) at the user's request.

Thus there are two structures that interact with, or point to, the information units in the information unit database. This leads to an advantage since the present invention offers two possibilities of finding a desired information unit. First there is the possibility of using the structure tags, which are based on products and/or use of bearings and seals. Second there is the possibility of using solution category tags, which are based on the solution category, i.e. whether the information unit deals with design, reliability, maintenance or training in relation to bearings and seals. Combining these two possibilities results in an easier and swifter way of retrieving needed information.

In an alternative embodiment of the present invention the descriptor tag of an information unit is constituted by a portion of its information item. Thus the descriptor tag can be constituted by one of 1) the title of the information and 2) the title and the starting words in the information item. From an information provider's viewpoint, this makes updating of the information units easier since the descriptor tag can be automatically assembled by simply selecting a number of characters of the information item.

In an alternative embodiment of the present invention the descriptor tag of an information item is constituted by a description of the contents of the information item. From a user's viewpoint, this makes the assessment of whether an information unit being relevant by reading its descriptor easier.

In an alternative embodiment of the present invention the information item is comprised by at least one of the following information types: text, photo, table and drawing. Using combinations of the above increases the readability and possibility of understanding the information items.

In an alternative embodiment of the present invention the initial set of descriptor tags is based on a cookie from a previous use session of the computer program product. Using a cookie helps the user to accessing information units fast. This mean that a user can easy and fast return back to an information unit provided that the user has taken part of that information unit in a previous use session. Thus, using cookies will reduce the effort of searching by selecting easier and swifter.

In an alternative embodiment of the present invention the initial set of descriptor tags is based on a default set. Thus a user will be offered a starting set of information units that will be presented to him/her.

In an alternative embodiment of the present invention the information unit database is comprised in the computer program product. This leads to faster and easier data access for a user and a cost advantage for the provider of the computer program product.

In an alternative embodiment of the present invention the information unit structure database is comprised in the computer program product. This leads to faster and easier data access for a user and a cost advantage for the provider of the computer program product.

In an alternative embodiment of the present invention the information unit database is integrated with the information unit structure database. This leads to faster and easier data access for a user and a cost advantage for the provider of the computer program product.

In an alternative embodiment of the present invention the computer program product is intended to be used by a server connected to the internet. This increases the opportunities for distant users to use the computer program product to select among information units of a plurality of structured information units concerning at least one of products, their use and technical solutions in relation to bearings and seals.

In an alternative embodiment of the present invention, the computer program product is loaded on a carrier, such as a CD-ROM.

### BRIEF DESCRIPTION OF THE DRAWINGS

The invention will now be further described with reference to the following drawings.

Figure 1 schematically shows an information unit, its contents, and its relations to an information unit database and an information unit structure database according to one embodiment of the present invention.

Figure 2 schematically shows an information unit and the pointers interconnecting its constituents according to the one preferred embodiment of the present invention.

Figure 3 schematically shows a computer interface presenting an initial set of descriptor tags.

Figure 4 schematically shows a computer interface presenting a set of descriptor tags.

### DESCRIPTION OF PREFERRED EMBODIMENTS

In this section a number of preferred embodiments based on the present invention will be presented.

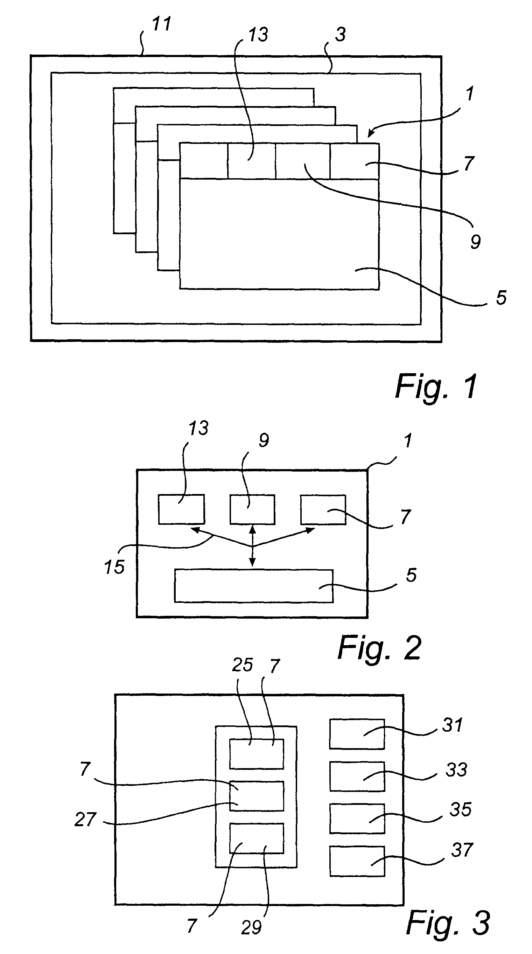

The first embodiment deals with an example of an information unit. In Figure 1 an example of an information unit 1 is presented. The information unit 1, which is comprised in an information unit database 3, is arranged to comprise an information item 5. The information item 5 comprises information related to at least one of the products, their use and technical solutions in relation to bearings and seals. An example in relation to the field of compressors of the contents of an information item 5 is "Air compressors are used to supply high pressure air for a number of different applications. The environment for bearings include exposure to high speed and high loads..."

The information unit 1 also comprises a descriptor tag 7 indicating the information contents of the information item 5. The information unit further comprises a structure tag 9 pointing to at least one information unit in an information unit structure database 11 to which the information unit 1 belongs. The information unit structure database 11 includes the information units 1 of the information unit database 3.

The information unit 1 also comprises a solution category tag 13 pointing to at least one information unit 1 in the information unit structure database 11 to which the information unit 1 belongs. The solution category tag 13 indicates belonging of the information unit 1 to one of design, reliability, maintenance and training categories.

There are pointers 15 that interconnect the information item 5, the descriptor tag 7, the solution category tag 13 and the structure tag 11 to form an information unit 1. This is presented in Figure 2.

The computer program product is loadable into the internal memory of a computer and it comprises computer program code portions for performing the following steps when run on a computer including input and output means:
a) Presenting an initial set of descriptor tags using the output means. In this embodiment, which is a schematical illustration of the graphics interface of the computer program product presented in Figure 3, the initial set of descriptors is 1) "Compressors" 25, 2) "Petrochemical" 27, and 3) "Pumps" 29. This set points out product areas in which bearings and seals may be used. These constitute the initial set of the descriptor tags 7 constituting a default set. Figure 3 also includes solutions category tags: design solutions 31, maintenance solutions 33, reliability solutions 35 and training solutions 37. An example of a descriptor tag 7 of an information item 1 dealing with a reliability solution is "10 tips for trouble free bearing operation". An example of a descriptor tag 7 dealing with a maintenance solution is "A maintenance audit focuses on improvements that will have the most impact on maximizing plant assets".

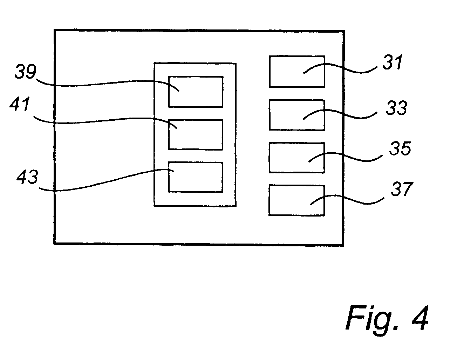

The user can choose how to proceed by clicking on the buttons 25, 27, 29, 31, 33, 35, 37 on the computer interface by using a mouse. In case the user clicks on the button for compressors 25, the computer program product will respond by presenting information as schematically presented in Figure 4. In Figure 4 the following clickable descriptor tags are presented: "Screw pump" 39, "Reciprocating pump" 41, and "Other pumps" 43. Also presented in Figure 4 are the solutions category tags: design solutions 31, maintenance solutions 33, reliability solutions 35 and training solutions 37. From here the user can continue selecting to narrow down the number of available information units. It is especially noteworthy that the number of information units representing the solutions in Figure 3 is higher than the number available in Figure 4. Only the solutions that are relevant in the context of "Compressors" can be retrieved from the computer interface presented in Figure 3. This means that the narrowing down procedure causes the computer to "deselect" the information units that are no longer relevant. For instance in case a user selects information units related to "Screw compressors" then the user will no be burdened with information units dealing with "Reciprocating compressors" since there are no tags directly connecting these kinds of information units.

When the user selects, the computer program product receives an instruction to assemble a new set of descriptor tags 7, 25, 27, 29. The instruction is generated by the user using the input means to select one of a structure tag and a solution category tag by clicking on the buttons 25, 27, 29, 31, 33, 35, 37. This results in the generation of a new set of information units 1 to be presented. At least one of the structure 9 and the solution category tags 13, 31, 33, 35, 37 of the information units 1 in the new set are interconnected to the previous set. The computer program presents the descriptor tags 7 of the new set of the information units using the output means.

These steps can be repeated to repetitiously narrow down the set of relevant information units 1 at the user's request. Finally the user has reached the goal of the search and then the selection process is finalized.

In the information units that do not point to other information units the tags are set to a predetermined tag indicating that that information unit does not point to another information unit.

In the examples of descriptor tags 7 according to the present invention the descriptor tag 7 of an information unit 1 is constituted by a title of the information item 5, namely e.g. "Compressor", "Screw compressor" and "Reciprocating compressor".

In one embodiment the computer program product according to the present invention is intended to be used by a server connected to the internet. In another embodiment of the present invention the initial set of descriptor tags 7 is based on a cookie from a previous use session.

In yet another embodiment the computer program product according to the present invention is loaded on a carrier, such as a CD-ROM.

## Claims

1. Computer program product for assisting a user to select among information units of a plurality of structured information units concerning at least one of products, their use and technical solutions in relation to bearings and seals, wherein
- each information unit, which is comprised in an information unit database, is arranged to comprise
- an information item comprising information related to at least one of the products, their use and technical solutions in relation to bearings and seals,
- a descriptor tag indicating the information contents of the information item,
- a structure tag pointing to at least one information unit in an information unit structure database, the information unit structure database including the information units of the information unit database,
- a solution category tag pointing to at least one information unit in the information unit structure database and indicating belonging of the information unit to one of design, reliability, maintenance and training categories, and
- pointers interconnecting the information item, the descriptor tag, the solution category tag and the structure tag to an information unit,
- the computer program product being loadable into the internal memory of a computer and comprising computer program code portions for performing the following steps when run on a computer including input and output means:
a) presenting an initial set of descriptor tags using the output means,
b) receiving an instruction to assemble a new set of descriptor tags, the instruction being generated by the user using the input means to select one of a structure tag and a solution category tag, the instruction resulting in the generation of a new set of information units, where at least one of the structure and the solution category tags of the information units in the new set are interconnected to the information units of the previous set,
c) presenting the descriptor tags of the new set of the information units using the output means, and
d) repeating step b) and c) at the user's request.

2. Computer program product according to claim 1, wherein the descriptor tag of an information unit is constituted by a portion of its information item.

3. Computer program product according to claim 1, wherein the descriptor tag of an information item is constituted by a description of the contents of the information item.

4. Computer program product according to claim 1, wherein the information item is comprised by at least one of the following information types: text, photo, table and drawing.

5. Computer program product according to claim 1, wherein the initial set of descriptor tags is based on a cookie from a previous use session of the computer program product.

6. Computer program product according to claim 1, wherein the initial set of descriptor tags is based on a default set.

7. Computer program product according to claim 1, wherein the information unit database is comprised in the computer program product.

8. Computer program product according to claim 1, wherein the information unit structure database is comprised in the computer program product.

9. Computer program product according to claim 1, wherein the information unit database is integrated with the information unit structure database.

10. Computer program product according to claim 1, intended to be used by a server connected to the internet.

11. Computer program product according to claim 1, loaded on a carrier.
